# EUROPÄISCHE PATENTANMELDUNG

(11) **EP 2 067 694 A1**
(43) Veröffentlichungstag der Anmeldung: **10.06.2009**
(21) Anmeldenummer: 08105397.7
(22) Anmeldetag: 22.09.2008
(51) Int. Cl.: B62M 23/02, B60L 7/26

(54) **Fahrrad mit elektrischem Hilfsantrieb sowie Verfahren zum Betreiben eines derartigen Fahrrads**

(30) Priorität: 29.10.2007 DE 102007051559
(71) Anmelder: ROBERT BOSCH GMBH, 70442 Stuttgart (DE)
(72) Erfinder: Roessler, Mario, 37004, Ceske Budejovice (CZ); Backes, Markus, 70736, Fellbach (DE); Kohlrausch, Philipp, 70180, Stuttgart (DE)

(57) **Zusammenfassung**

Die vorliegende Erfindung betrifft ein Fahrrad mit elektrischem Hilfsantrieb, umfassend eine elektrische Maschine (2), welche als Elektromotor und als Generator betreibbar ist, einen Akku (3) zur Speicherung elektrischer Energie, welcher mit der elektrischen Maschine (2) verbunden ist, eine mechanische oder hydraulische Bremsanlage, eine Sensoreinrichtung (5), welche an der Bremsanlage angeordnet ist, um eine vom Fahrer gewünschte Höhe einer Bremskraft zu erfassen, und eine Steuereinheit (4), die ausgelegt ist, in Abhängigkeit von einem Signal der Sensoreinrichtung (5) die elektrische Maschine (2) als Generator zu betreiben und zumindest einen Teil der notwendigen Bremsleistung durch den Generatorbetrieb der elektrischen Maschine (2) bereitzustellen und gleichzeitig den Akku wieder aufzuladen.

## Beschreibung

### Stand der Technik

Die vorliegende Erfindung betrifft ein Fahrrad mit elektrischem Hilfsantrieb sowie ein Verfahren zum Betreiben einer elektrischen Maschine eines derartigen Fahrrads.

Elektrofahrräder sind aus dem Stand der Technik in verschiedenen Ausgestaltungen bekannt. Üblicherweise wird ein Fahrrad mit einem Elektromotor ausgestattet, um eine elektrische Antriebsstützung, beispielsweise bei Bergauffahrten, bei Gegenwind oder als Unterstützung beim Treten zu verwenden. Der Elektromotor wird dabei üblicherweise von einer Batterie versorgt, welche z.B. am Stromnetz wiederaufladbar ist. Aufgrund technischer Fortschritte, insbesondere im Bereich der Batterien bzw. Akkus, konnten insbesondere das Gewicht und die Größe derartiger Fahrräder mit Elektromotor reduziert werden. Zum Bremsen weisen die bekannten Elektrofahrräder die bewährten mechanischen oder hydraulischen Bremsanlagen auf, welche z.B. als Felgenbremse oder Scheibenbremse für Vorder- und/oder Hinterräder vorgesehen sind. Eine Betätigung der bekannten Bremsen erfolgt dabei insbesondere über einen an einem Lenker befestigten Bremshebel.

### Vorteile der Erfindung

Das erfindungsgemäße Fahrrad mit elektrischem Hilfsantrieb mit den Merkmalen des Patentanspruchs 1 weist demgegenüber den Vorteil auf, dass eine elektrische Maschine des Fahrrads als Elektromotor zum Antreiben des Fahrrads und als Generator zum Aufladen eines Akkus des Fahrrads verwendet werden kann. Somit kann erfindungsgemäß die elektrische Maschine des Fahrrads auch eine Bremsenergie bereitstellen, welche zum Abbremsen des Fahrrads verwendet wird. Das Fahrrad umfasst ferner eine mechanische oder hydraulische oder andere konventionelle Bremsanlage sowie eine Sensoreinrichtung, um eine vom Fahrer, z.B. durch Betätigung eines Bremshebels, gewünschte Bremskraft zu erfassen. Eine Steuereinheit ist ausgelegt, um in Abhängigkeit von einem Signal der Sensoreinrichtung die elektrische Maschine als Generator zu betreiben und zumindest einen Teil der notwendigen Bremsleistung durch den Generatorbetrieb der elektrischen Maschine bereitzustellen.

Die Unteransprüche zeigen bevorzugte Weiterbildungen der Erfindung.

Vorzugsweise umfasst die Bremsanlage des Fahrrads eine Handbremse, und die Sensoreinrichtung ist in die Handbremse integriert. Dadurch kann ein einfacher und platzsparender Aufbau für die Sensoreinrichtung erreicht werden. Die Sensoreinrichtung kann in einen Bremshebel oder eine Halterung für den Bremshebel der Handbremse integriert sein.

Weiter bevorzugt umfasst die Sensoreinrichtung einen Dehnungsmessstreifen und/oder einen Potentiometer. Mittels des Dehnungsmessstreifens kann durch Messung einer Längenänderung des Dehnungsmessstreifens eine Zugkraft am Bremshebel erfasst werden und von dieser eine gewünschte Bremskraft des Fahrers bestimmt werden. Das Potentiometer ist vorzugsweise an einem Bautenzug der Bremsanlage angeordnet und erfasst eine Wegänderung des Bautenzugs, wobei basierend auf dieser Wegänderung eine gewünschte Bremskraft des Fahrers bestimmt wird. D.h., wenn der Fahrer den Bremshebel in einem großen Umfang betätigt, erfassen der Dehnungsmessstreifen bzw. der Potentiometer große Änderungen, welche auf einen starken Bremswunsch des Fahrers schließen lassen können.

Um eine Beschädigung des Akkus zu verhindern, begrenzt die Steuereinheit vorzugsweise einen Ladestrom zum Laden des Akkus mittels der als Generator betriebenen elektrischen Maschine auf einen vorbestimmten Wert.

Weiter bevorzugt bestimmt die Steuereinheit bei einem Bremsvorgang, dass eine Bremsleistung bis zu einem vorgegebenen Wert ausschließlich mittels der als Generator betriebenen elektrischen Maschine erfolgt. Hierdurch können die mechanischen bzw. hydraulischen Bremsen vor Verschleiß geschützt werden, da immer zuerst die elektrische Maschine als Bremse verwendet wird.

Weiter bevorzugt betrifft die vorliegende Erfindung ein Verfahren zum Betreiben einer elektrischen Maschine eines Fahrrads als Bremse, wobei eine Steuereinheit nach einem Erfassen eines Bremswunsches des Fahrers die elektrische Maschine als Generator betreibt, um einen Akku des Fahrrads aufzuladen und gleichzeitig das Fahrrad abzubremsen. Ein Abbremsen des Fahrrads kann dabei gleichzeitig durch die als Generator betriebene elektrische Maschine und durch eine vorhandene mechanische bzw. hydraulische Bremsanlage des Fahrrads erfolgen. Besonders bevorzugt erfolgt dabei bis zu einer vorgegebenen Bremsleistungsgrenze ein Abbremsen des Fahrrads ausschließlich mit der als Generator betriebenen elektrischen Maschine. Die Grenze entspricht dabei vorzugsweise einem maximalen Ladestrom des Akkus.

Vorzugsweise teilt die Steuereinheit des Fahrrads einen Bremswunsch des Fahrrads dabei in einen ersten Teil und einen zweiten Teil auf, wobei der erste Teil ausschließlich mit der als Generator betriebenen elektrischen Maschine erzeugt wird und der zweite Teil mittels der vorhandenen mechanischen und/oder hydraulischen Bremsanlage des Fahrrads erzeugt wird.

Das erfindungsgemäße Fahrrad bzw. das erfindungsgemäße Verfahren ermöglichen es somit, dass eine Reichweite eines Fahrrads mit Hilfsantrieb deutlich verlängert wird, da eine beim Bremsen erzeugte Energie zum Wiederaufladen des Akkus des Fahrrads verwendet wird. Ferner werden erfindungsgemäß die Bauteile der mechanischen und/oder hydraulischen Bremsanlage vor einem zu schnellen Verschleiß geschützt. Ferner hat das erfindungsgemäße Fahrrad auch insbesondere bei Regen oder einer nassen Fahrbahn eine sehr gute Bremswirkung. Dabei weist das erfindungsgemäße Fahrrad eine einfache und robuste Bedienung auf.

### Zeichnung

Nachfolgend wird ein Ausführungsbeispiel der Erfindung unter Bezugnahme auf die begleitende Zeichnung im Detail beschrieben. In der Zeichnung ist:
- Figur 1: eine schematische Seitenansicht eines Fahrrads gemäß einem Ausführungsbeispiel der Erfindung,
- Figur 2: ein Blockschaltbild, welches eine Funktion der elektrischen Maschine als Antrieb verdeutlicht,
- Figur 3: ein Blockschaltbild, welches die Funktion der elektrischen Maschine als Generator während eines Bremsvorgangs verdeutlicht,
- Figur 4: ein Diagramm, welches eine Verteilung der erzeugten Bremskraft auf die elektrische Maschine und eine konventionelle Bremsanlage des Fahrrads verdeutlicht,
- Figur 5: eine schematische Ansicht einer Handbremse mit einem Sensorelement, und
- Figur 6: eine schematische Ansicht einer Handbremse mit einem alternativen Sensorelement.

### Bevorzugte Ausführungsform der Erfindung

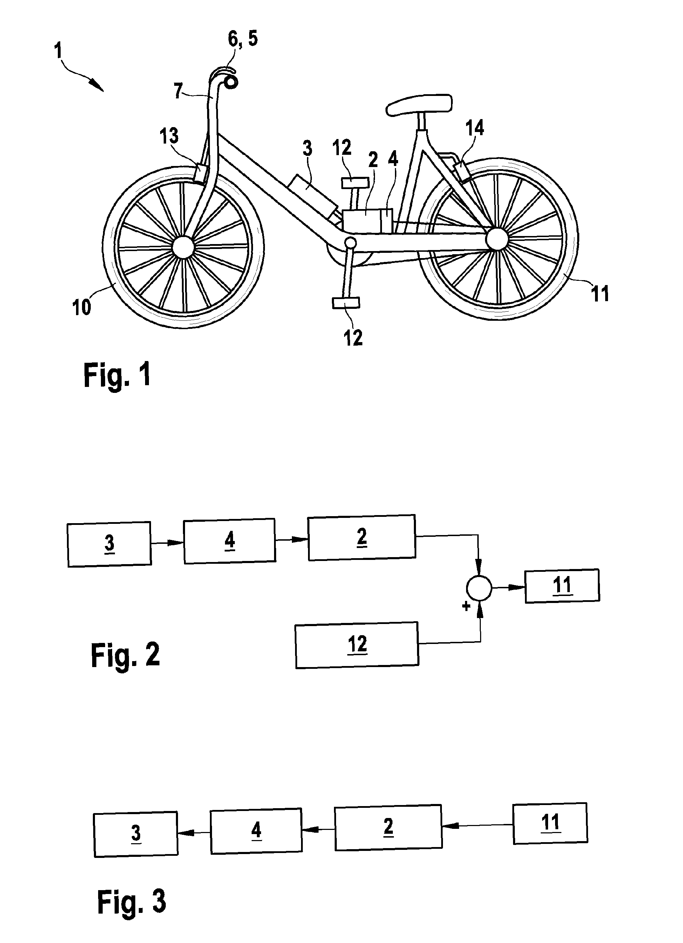

Nachfolgend wird unter Bezugnahme auf die Figuren 1 bis 5 ein Fahrrad 1 mit elektrischem Hilfsantrieb gemäß einer bevorzugten Ausführungsform der Erfindung im Detail beschrieben.

Figur 1 zeigt eine schematische Seitenansicht eines Fahrrads 1 mit einer elektrischen Maschine 2 als Hilfsantrieb. Die elektrische Maschine 2 kann als Elektromotor und als Generator betrieben werden. Ferner umfasst das Fahrrad einen Akku 3, welcher mit der elektrischen Maschine 2 verbunden ist. Der Akku 3 dient zur Speicherung von elektrischer Energie, mit welcher die elektrische Maschine 2 als Elektromotor betrieben werden kann, um das Fahrrad ausschließlich oder zusätzlich zur Muskelkraft des Fahrers anzutreiben. Ferner umfasst das Fahrrad eine Steuereinheit 4, welche die elektrische Maschine 2 steuert bzw. regelt. Weiter umfasst das Fahrrad 1 eine konventionelle Bremsanlage, welche als mechanische Bremse, beispielsweise als Felgenbremse oder auch als hydraulische Bremse ausgelegt sein kann. Eine Betätigung erfolgt dabei vorzugsweise über Handbremshebel am Lenker. Das Fahrrad umfasst ferner eine Sensoreinrichtung 5, welche an der Bremsanlage angeordnet ist, um eine vom Fahrer gewünschte Bremskraft zu erfassen.

Im beschriebenen Ausführungsbeispiel ist die Bremsanlage als mechanische Bremse ausgelegt und umfasst eine Vorderbremse 13 sowie eine Hinterbremse 14. Die Vorderbremse 13 ist als Felgenbremse am Vorderrad 10 vorgesehen und die Hinterbremse 14 ist als Felgenbremse am Hinterrad 11 vorgesehen. Über Pedale 12 kann ein Fahrer in bekannter Weise das Fahrrad 1 durch Muskelkraft antreiben. Ferner kann beispielsweise durch Betätigung eines Schalters o. Ä. die elektrische Maschine 2 als Elektromotor betrieben werden, welche das Fahrrad zusätzlich oder ausschließlich antreibt. Hierzu wird der Elektromotor über den Akku 3 mit Strom versorgt. Die Stromstärke, welche den Elektromotor versorgt, wird dabei durch die Steuereinheit 4 in Abhängigkeit von einem vom Fahrer gewünschten Zusatzantrieb gesteuert. Zusätzlich kann über die Pedale 12 noch die Muskelkraft des Fahrers als Antrieb dienen. Dies ist schematisch in Figur 2 dargestellt. Somit kann das Hinterrad 11 gleichzeitig durch Muskelkraft als auch durch Betreiben der elektrischen Maschine 2 als Elektromotor angetrieben werden.

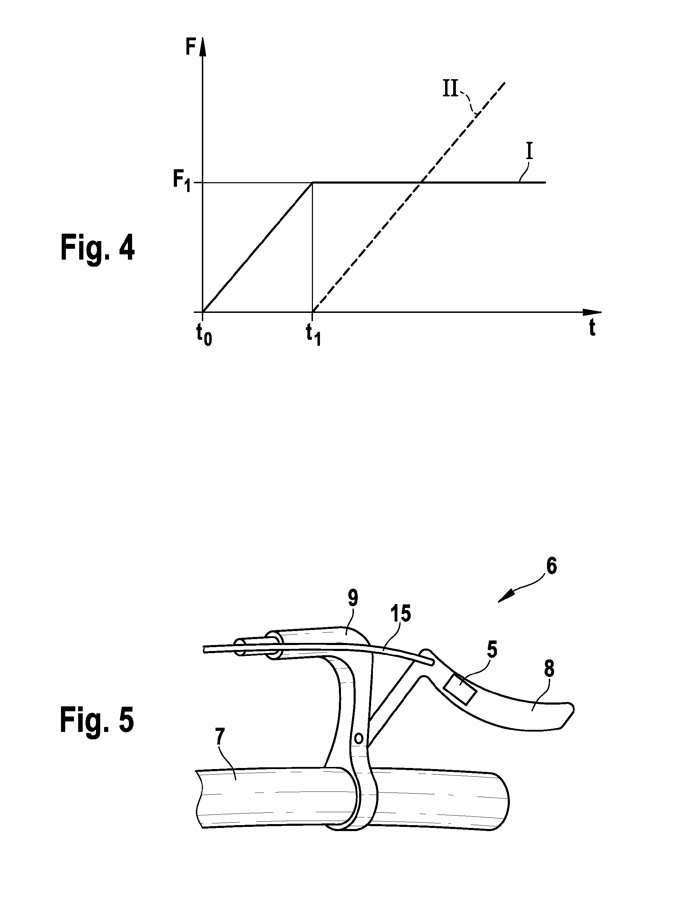

Ferner ermöglicht es das erfindungsgemäße Fahrrad 1, dass während eines Bremsvorgangs die elektrische Maschine 2 als Generator betrieben werden kann. Dadurch kann der Akku 3 wieder aufgeladen werden und ferner eine Bremswirkung durch den Generatorbetrieb der elektrischen Maschine 2 erreicht werden. Dies ist schematisch in Figur 3 gezeigt. Figur 3 zeigt schematisch die Wirkungskette während eines Bremsvorgangs mit der elektrischen Maschine 2. Die kinetische Energie des Fahrrads in Form des sich drehenden Hinterrads 11 wird durch den Generatorbetrieb der elektrischen Maschine 2 in Strom umgewandelt, wobei die Steuereinheit 4 dann den erzeugten Strom zum Aufladen des Akkus 3 verwendet. Hierzu ist, wie aus Figur 5 ersichtlich ist, an einer Handbremse 6, welche an einem Lenker 7 des Fahrrads angeordnet ist, eine Sensoreinrichtung 5 angeordnet. Wie aus Figur 5 ersichtlich ist, ist die Sensoreinrichtung 5 an einem Bremshebel 8 der Handbremse 6 angeordnet. Die Sensoreinrichtung 5 dieses Ausführungsbeispiels ist ein Dehnungsmessstreifen. Durch die Zugkraft am Bremshebel 8 erfolgt eine Längenänderung des Dehnungsmessstreifens, aus welcher Rückschlüsse auf die Bremskraft gezogen werden können. Der Dehnungsmessstreifen erfasst dabei eine am Bremshebel 8 aufgebrachte Bremskraft. Der Bremshebel 8 ist in bekannter Weise schwenkbar an einem am Lenker 7 befestigten Halteelement 9 angeordnet. Ein Bautenzug 15 ist ebenfalls mit dem Bremshebel 8 verbunden und führt zu einer Bremse am Vorderrad 10 bzw. am Hinterrad 11. Die zweite, nicht gezeigte Handbremse des Fahrrads ist dabei gleich wie die in Figur 5 beschriebene aufgebaut.

Die Sensoreinrichtung 5 ist mit der Steuereinheit 4 verbunden, wobei die Steuereinheit 4 in Abhängigkeit von dem Signal der Sensoreinrichtung 5 die elektrische Maschine 2 als Generator betreibt, sobald der Fahrer einen Bremswunsch durch Betätigung des Bremshebels verwirklicht. Der als Sensoreinrichtung 5 verwendete Dehnungsmessstreifen erfasst dabei eine am Bremshebel 8 ausgeübte Bremskraft des Fahrers, so dass in Abhängigkeit von der Bremskraft auf eine Höhe des Bremswunsches, d.h. eine leichte oder eine starke Bremsung, geschlossen werden kann. Um eine Überlastung des Akkus 3 zu vermeiden, begrenzt die Steuereinrichtung 4 dabei die Generatorleistung der elektrischen Maschine 2. Die Steuereinrichtung 4 steuert somit, inwieweit die Bremskraft für einen Bremswunsch des Fahrers durch Betätigung der elektrischen Maschine 2 als Generator bzw. durch Betätigung der konventionellen Bremsanlage bereitgestellt wird. Die Steuereinheit 4 kann dabei eine gewünschte Bremsleistung in beliebigem Umfang auf die elektrische Maschine im Generatorbetrieb bzw. die normale mechanische Bremsanlage verteilen.

Sobald der Akku 3 durch den Betrieb der elektrischen Maschine als Generator vollständig aufgeladen wurde, soll dieser nicht mehr geladen werden, um Schäden an den Bauteilen des Akkus 3 zu vermeiden. Hierzu können dann beispielsweise Widerstände vorgesehen sein, an denen die durch die elektrische Maschine im Generatorbetrieb erzeugte Leistung in Wärme umgewandelt wird.

Somit kann erfindungsgemäß neben der Rückgewinnung von Energie beim Bremsen des Fahrrads 1 auch eine Reduzierung eines Verschleißes der mechanischen Bremsanlage erreicht werden. Ferner kann durch Betreiben der elektrischen Maschine 2 als Generator mit Bremswirkung ferner auch bei einer nassen Fahrbahn eine sichere Bremsung erreicht werden. Zum Bremsen muss ein Fahrer dabei lediglich den Bremshebel in gewohnter Weise betätigen und die Steuereinheit 4 bestimmt dann, inwieweit eine Bremsung über den Generatorbetrieb der elektrischen Maschine bzw. die konventionelle Bremsanlage erfolgen soll. In Figur 4 ist ein typischer Bremsvorgang des Fahrrads als Diagramm der Bremskraft F über der Zeit t dargestellt. Zu Beginn der Bremsung im Zeitpunkt t0, d.h. dem Zeitpunkt, an dem der Fahrer beginnt, am Bremshebel zu ziehen, wird zuerst ausschließlich mittels der als Generator betriebenen elektrischen Maschine 2 gebremst (durchgezogene Linie I). Hierbei steigt die Bremskraft linear bis zu einem Wert F1 an, welcher zu einem Zeitpunkt t1 erreicht wird. Im weiteren Verlauf der Bremsung bleibt dann die Bremskraft durch den Generator konstant. Zum Zeitpunkt t1 wird zusätzlich noch mit der mechanischen Bremsung begonnen, was in Figur 4 durch die gestrichelte Linie II angedeutet ist. Die durch die mechanische Bremsanlage erzeugte Bremskraft steigt dabei linear an. Somit kann bei einer Addition der elektrischen Bremskraft (Linie I) und der mechanischen Bremskraft (Linie II) eine kontinuierliche lineare Bremskrafterzeugung mit konstanter Steigung verwirklicht werden, ohne dass dabei der Akku 3, beispielsweise durch einen zu hohen Strom, beschädigt werden kann.

Somit misst die Sensoreinrichtung 5, die die vom Fahrer am Bremshebel 8 aufgebrachte Kraft und die Steuereinheit 4 bestimmt, basierend auf dem gemessenen Kraftwert einen negativen Motorstrom, welcher proportional zur Kraft am Bremshebel ist. Über diesen Motorstrom erfolgt dann eine Aufladung des Akkus 3. Wenn die vom Fahrer aufgebrachte Kraft am Bremshebel ansteigt bzw. größer als ein maximal zulässiger Ladestrom des Akkus 3 ist, wird der Ladestrom konstant gehalten und die konventionelle Bremse aktiviert.

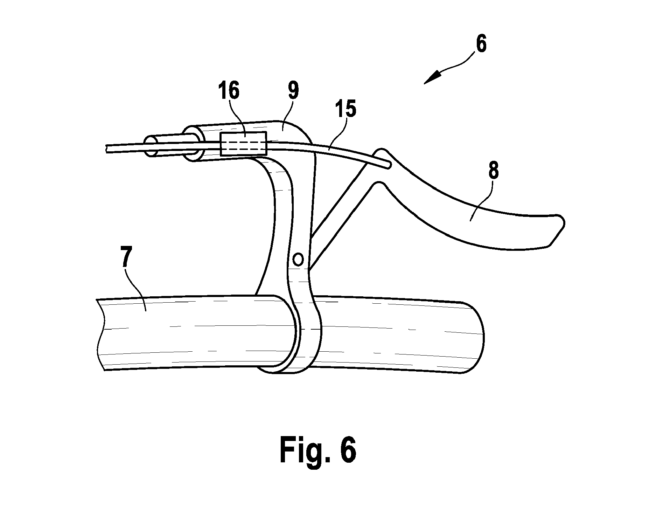

Figur 6 zeigt eine alternative Ausgestaltung der Handbremse 6. Im Unterschied zu der in Figur 5 gezeigten Handbremse weist die Handbremse 6 von Figur 6 als Sensoreinrichtung ein Potentiometer 16 auf. Das Potentiometer 16 ist dabei an der Halterung 9 der Handbremse angeordnet und bestimmt über eine Wegänderung des Bautenzugs 15 eine am Bremshebel 8 aufgebrachte Bremskraft. Das Potentiometer ist ebenfalls mit der Steuereinheit 4 verbunden, so dass die Steuereinheit 4 in Abhängigkeit von den vom Potentiometer erhaltenen Signalen die elektrische Maschine 2 als Generator steuert.

## Patentansprüche

1. Fahrrad mit elektrischem Hilfsantrieb, umfassend
- eine elektrische Maschine (2), welche als Elektromotor und als Generator betreibbar ist,
- einen Akku (3) zur Speicherung elektrischer Energie, welcher mit der elektrischen Maschine (2) verbunden ist,
- eine mechanische oder hydraulische Bremsanlage,
- eine Sensoreinrichtung (5), welche an der Bremsanlage angeordnet ist, um eine vom Fahrer gewünschte Höhe einer Bremskraft zu erfassen, und
- eine Steuereinheit (4), die ausgelegt ist, in Abhängigkeit von einem Signal der Sensoreinrichtung (5) die elektrische Maschine (2) als Generator zu betreiben und zumindest einen Teil der notwendigen Bremsleistung durch den Generatorbetrieb der elektrischen Maschine (2) bereitzustellen und gleichzeitig den Akku wieder aufzuladen.

2. Fahrrad nach Anspruch 1, **dadurch gekennzeichnet, dass** die Bremsanlage eine Handbremse (6) umfasst und die Sensoreinrichtung (5) in die Handbremse integriert ist.

3. Fahrrad nach Anspruch 2, **dadurch gekennzeichnet, dass** die Handbremse einen Bremshebel (8) und eine Halterung (9) umfasst, und die Sensoreinrichtung (5) in den Bremshebel (8) und/oder in die Halterung (9) integriert ist.

4. Fahrrad nach Anspruch 2 oder 3, **dadurch gekennzeichnet, dass** die Sensoreinrichtung ein Dehnungsmessstreifen oder ein Potentiometer (16) ist.

5. Fahrrad nach einem der vorhergehenden Ansprüche, **dadurch gekennzeichnet, dass** die Steuereinheit (4) einen Ladestrom zum Laden des Akkus (3) durch die als Generator betriebene elektrische Maschine (2) auf einen vorbestimmten Wert begrenzt.

6. Fahrrad nach einem der vorhergehenden Ansprüche, **dadurch gekennzeichnet, dass** bei einem Bremsvorgang die Steuereinheit (4) eine Bremsung des Fahrrads derart ausführt, dass bis zu einem vorgegebenen Wert der Bremskraft eine Bremsleistung ausschließlich mittels der als Generator betriebenen elektrischen Maschine (2) erzeugt wird.

7. Verfahren zum Betreiben einer elektrischen Maschine (2) eines Fahrrads als Bremse, wobei eine Steuereinheit (4) nach Erfassen eines Bremswunsches eines Radfahrers die elektrische Maschine (2) als Generator betreibt und das Fahrrad durch den Generatorbetrieb der elektrischen Maschine abbremst sowie einen Ladestrom zum Aufladen eines Akkus (3) des Fahrrads erzeugt, wobei eine durch die als Generator betriebene elektrische Maschine (2) erzeugte Bremswirkung proportional zu einer Bremskraft an einer Bremseinrichtung, insbesondere einer Handbremse (6), des Fahrrads ist.

8. Verfahren nach Anspruch 7, **dadurch gekennzeichnet, dass** die Steuereinheit (4) bei Überschreiten einer durch die als Generator betriebene elektrische Maschine (2) bereitgestellten Bremsleistung die restliche Bremsleistung mittels einer mechanischen und/oder hydraulischen Bremsanlage erzeugt.

9. Verfahren nach Anspruch 7 oder 8, **dadurch gekennzeichnet, dass** die Steuereinheit (4) bis zu einem vorbestimmten Wert einer Bremsleistung die Bremsleistung ausschließlich mittels der als Generator betriebenen elektrischen Maschine bereitstellt.
